# EUROPEAN PATENT SPECIFICATION

(11) **EP 0 626 712 B1**
(45) Date of publication and mention of the grant of the patent: **08.07.1998**
(21) Application number: 94201433.3
(22) Date of filing: 20.05.1994
(51) Int. Cl.: H01H 71/02, H02B 1/26

(54) **A coupling device between two modular electric apparatus**
Kupplungsvorrichtung zwischen zwei modularen elektrischen Geräten
Dispositif de couplage entre deux appareils électriques modulaires

(30) Priority: 26.05.1993 IT MI931084
(43) Date of publication of application: 30.11.1994
(73) Proprietor: BTICINO S.P.A., 20154 Milano (IT)
(72) Inventor: Fabrizi, Fabrizio, I-24100 Bergamo (IT); Pianezzola, Sergio, I-21100 Calcinate del Pesce, Varese (IT)
(74) Representative: Maggioni, Claudio

(56) References cited:
- EP-A- 0 310 474
- EP-A- 0 375 568
- DE-U- 8 807 464
- FR-A- 2 544 158
- FR-A- 2 588 438
- FR-A- 2 590 104
- GB-A- 2 009 832
- US-A- 4 632 594

## Description

This invention relates to a coupling device provided on two modular electric apparatus according to the preamble of claim 1, so-called of the DIN type because intended for juxtaposed installation on a rail holder conformant with that body of standards.

As is known, modern electric systems make ample use of modular electric apparatus, each designed to perform a predetermined function.

By suitably combining such apparatus, complex structures can be obtained which provide the sum of the different functions.

For example, a plurality of single-pole switch modules identical with one another may be coupled to form a two- or three-pole switch.

With the switches, which usually provide maximum current protection (known as magnetothermal switches), there may be associated protection devices responsive to differential currents, signalling devices, remote operation devices, etc..

The construction of systems from modular apparatus affords considerable apparatus production and distribution scale savings, and fills a variety of demands with a limited number of components, but poses the problem of providing reliable and safe electric systems which be at one time simple to install, compact and consistent, in the sense that the various apparatus ought to have homogeneous electric, responsiveness, capacity and voltage characteristics.

In this respect, international standards have been set which include the following provisions for modular apparatus:

The apparatus should be coupleable by means of intrinsic elements, requiring no disposable components like screws, nuts, and any separate apparatus elements.

The coupling should be easy to establish and preferably require no special tools, and once the coupling is completed, the apparatus should be difficult, if not impossible, to separate.

It should not be possible to couple apparatus having different voltage or current ratings, or certain apparatus (e.g. switches) should not be coupleable with other apparatus (differential or stray current detectors) having lower current or voltage ratings.

It is obvious then that the coupling devices between apparatus should be, as far as possible, simple, economical to manufacture, and compact, and should not burden the apparatus manufacturing processes and costs.

Additionally, they should be of no substantial bulk on those faces of the apparatus which are not juxtaposed, not to interfere with any clamp-down, electric interconnection, actuation and/or signalling elements already occupying such faces.

Known are, for example from Italian Utility Model Patent No. 21764-B/87, filed on 9.6.1987, coupling devices for modular electric apparatus which consist of tenon and mortises and hook pairs hinged on a first apparatus, which hook into a socket on a second apparatus and form the coupling between the two apparatuses.

These devices can only be provided economically on apparatuses formed in a container body composed of two half-shells split along a perpendicular plane to the juxtaposed faces of the apparatuses.

With apparatuses whose container body comprises half-shells split along a plane parallel to the iuxtaposed faces, the provision of similar devices would involve construction difficulties and undercutting which renders considerably complicated and expensive the container body molding process and, in all events, considerably troublesome and inaccurate the juxtaposition of the apparatuses and their coupling.

An example of such difficulties is provided by EP-A-0375568, on which the preamble of claim 1 is based, where two modular electric apparatuses are juxtaposed on their side faces and coupled by means of a plurality of locating pins and matching sockets for the pins which provide relative positioning of the two side faces, by means of a hooking tooth fixedly protruding from a side face for engagement in a hooking socket in a juxtaposed side face and further by means of a rider hinged on one of the apparatuses and engaging with a matching soket formed in the other juxtaposed apparatus.

Although accurate juxtaposition is obtained, construction difficulties and undercutting are not avoided.

These drawbacks are obviated, and the applicable standards met, by the coupling device provided on two modular electric apparatus forming the subject-matter of this invention which is defined in claim 1.

The seats for such slides are molded in a half-shell open at a parallel plane to the face to be juxtaposed, without undercuts and the need for multiple molds and/or movable inserts, and are conveniently arranged and open proximate to the edges of the face to be juxtaposed to allow easy introduction of the slides into their respective seats and movement of the slides to the hooked position by exerting a pressure on one end of the slides jutting out of the apparatus with the two apparatus juxtaposed.

Once the slide is moved to the hooked position, the slide can no longer be reached manually and its displacement to a released position requires the availability of a tool.

Since the positions of the slides and the locating pins and corresponding sockets may be selected as desired within wide limits, as may the shapes of the pins and the corresponding sockets, keyed couplings can be readily provided, that is couplings which are only permitted when the electric apparatus to be coupled are compatible as to certain electric characteristics.

Additional features and advantages of the device forming the subject-matter of this invention can be more clearly understood by having reference to the following description of a preferred embodiment and the accompanying drawings, in which:
Figure 1 is an exploded perspective view of first and second modular electric apparatus and a preferred embodiment of a coupling device according to this invention;
Figure 2 is an exploded perspective view, drawn to an enlarged scale, of a portion of one of the apparatus in Figure 1 and a slide with hooking means intended to be received within the apparatus;
Figure 3 is a perspective view of the same portion of the apparatus as in Figure 2, showing the slide of Figure 2 accommodated within the apparatus in a released position.

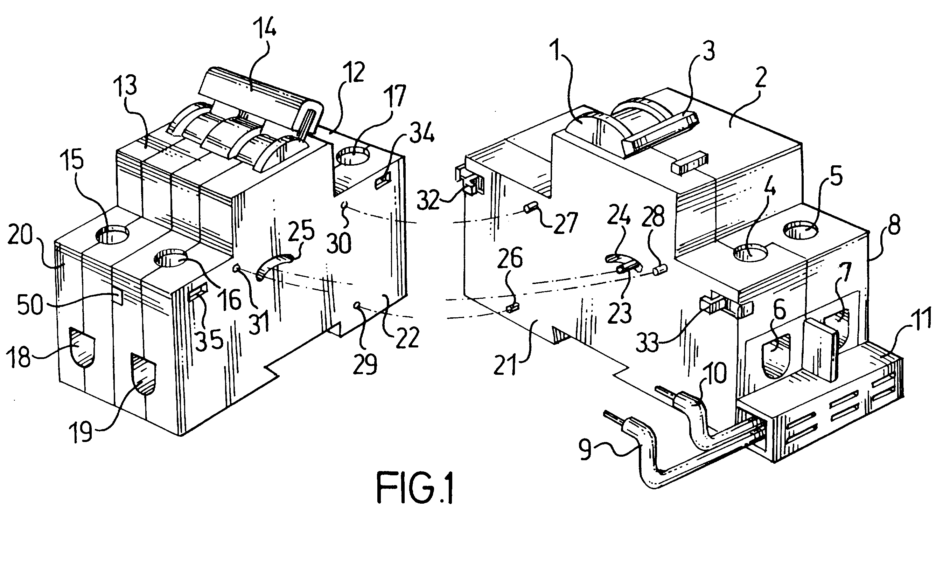

With reference to Figure 1, for simplicity and clarity of illustration, it seems appropriate to define some conventions of expression used hereinafter.

Each of the two electric apparatus to be coupled in an irreversible manner basically comprises a body in the generic form of a right parallelepiped with a back face intended for coupling with an installation rail using appropriate hooking teeth, a front juxtaposed to the back face, two juxtaposed side faces, a top face and a bottom face.

The electric apparatus are constructed for contact juxtaposition across a side face perpendicular to the apparatus installation rail.

In electric systems, more than two modular apparatus are usually juxtaposed beside one another.

Figure 1 shows a first electric apparatus 1, specifically a differential actuator, provided on the front 2 with a small lever 3 for mechanical resetting and two cylindrical openings 4, 5 for receiving the clamp screw for two electric connection terminals, not shown, in which two electric terminations introduced into the clamp terminals through two inlet openings 6, 7 present on the top face 8 (by convention) of the actuator are clamped tight.

Two outgoing terminations 9, 10 for interconnection of the second break apparatus are led out of the top face proximate to the back face and are partly protected by a screen 11 forming a protection groove.

The outgoing terminations, of the insulated single-wire type, are conveniently pre-formed to allow them to be inserted into the connecting terminals of the apparatus with which the differential actuator 1 is to co-operate.

This comprises a switch 12 provided on the front face 13 with a mechanical reset/release lever 14, a first pair of cylindrical openings 15, 16 for receiving two clamp screws of input clamp terminals, and a second pair of cylindrical openings, of which only one 17 is shown, for receiving two clamp screws of output terminals.

Access by the terminations 9, 10 to the input terminals of the switch 12 is permitted by two openings 18, 19 provided in the top face 20 of the switch.

When the differential actuator 1 and the switch 12 are juxtaposed with their respective side faces 21 and 22 in contact, the two actuation units are interconnected functionally in a known manner by means of a pin 23 which by coming out of a slot 24 in the wall 21 fits into a corresponding slot 25 in the wall 22, ensuring at least that the switch is opened by operation of the differential protection and optional slaving of the switch state to that of the differential protection.

The problem which the device forming the subject-matter of this invention solves is that of coupling in a stable manner and definite relationship the two modules 1 and 12 for subsequent installation thereof as an assembly on the rail holder.

For this purpose, the module 1 is provided with a plurality of pins 26, 27, 28 conveniently arranged to stand proud of the side face 21, while the module 12 is provided with a plurality of openings 29, 30, 31 arranged to be a mirror image of the pins 26, 27, 28 on the side face 22.

With the modules 1 and 12 juxtaposed to each other, with the side faces 21, 22 in mutual contact, the pins 26, 27, 28 fit into the corresponding openings 29, 30, 31 to ensure positive mutual positioning of the two modules and prevent amy relative displacement of the two modules across the contact plane.

It should be noted that only two locating pins are required for the purpose.

In practice, according to a preferred embodiment of this invention, the number of the pins used is greater than two, e.g. three or more, to enable the pins to perform a further keyed coupling function between modules.

It has previously been observed that certain apparatus, such as differential actuators, should only be coupled to magnetothermal switches having the same or a lower current rating.

For simplicity it may be assumed that only two current ratings be provided, e.g. 15 and 30A. Then, a differential module as 1 may be characterized, in relation to its current rating, with but two pins, e.g. pins 27 and 28, where the module rated current is 30A, and three pins 26, 27, 28 where the rated current is 15A.

Conversely, a switch module as 12 may be characterized, in relation to its current rating, with but two openings such as 30, 31 where the rated current is 15A, and with three openings 29, 30, 31, where the rated current is 30A.

It is apparent, therefore, that with this expedient, a differential module with a current rating of 30A can be coupled to a switch module with a current rating of both 15A and 30A, but a 30A switch module cannot be coupled to a 15A differential module because in this case the pin 26, failing to find a corresponding opening in the module 12, would interfere with the face 22, preventing close juxtaposition of the two modules.

It is apparent that the layout of the openings and pins may be exchanged, wholly or in part, between the two modules.

Alternatively, to obtain the same result, different layouts of the pins may be used for the different rated currents by providing, according to the rated current, a similar layout for the pin receiving openings, with the optional provision of a larger number of openings than of pins to permit selective couplings even between modules with different rating characteristics.

It is apparent that the pins 26, 27, 28 and sockets 29, 30, 31 may be molded in the module casings, each comprised of two paired half-shells, along a perpendicular molding direction to the plane of the juxtaposition side faces, with no need for specially complicated constructions.

The pins thus far described ensure precision of registry for the module coupling, and optionally a selective coupling, but do not prevent separation of the two juxtaposed modules.

For this purpose, a plurality of hooking teeth 32, 33, preferably two such teeth, are provided additionally to the pins and corresponding sockets, which are mounted on slides set in either module (e.g. module 1) at the location of the side face 21 and being slidable in the plane of said face.

With the modules juxtaposed the hooking teeth 32, 33 fit into corresponding sockets 34, 35, e.g. on the side face 22 of module 12, and displacement of the related slides results in the teeth 32, 33 becoming hooked to the side face 22 and preventing separation of the two modules thus coupled.

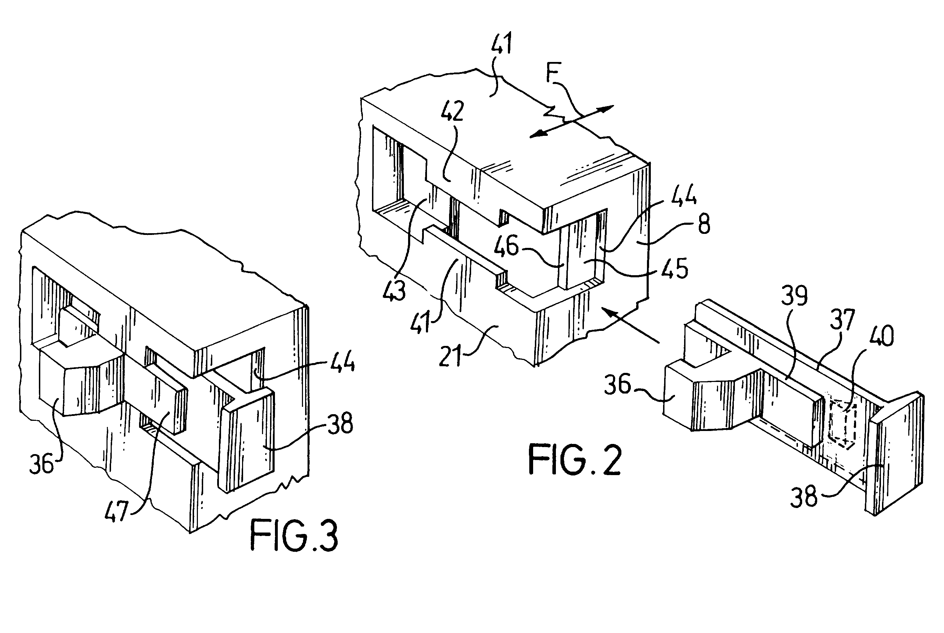

Figures 2 and 3 supply more accurate indications as to the structure of the hooking teeth and related slides and their modes of operation.

As shown in Figure 2, a hooking tooth 36 is conveniently molded from a plastics material as a lug of a slide comprised of tab 37 in the form of an elongate parallelpiped terminated with a head 38 perpendicular to the major direction of the tab.

The tab 37 is strengthened over one face by a rib 39 carrying the tooth 36.

On the opposite face, the tab 37 is provided with a raised retainer tooth 40 with the side opposite to the head 38 formed as an oblique ramp.

The body 41 of the module 1 has, on the side face 21 and proximate to the contact corners with the front upper face, an elongate groove for accommodating the slide, open throughout its length, on the face 21 and with one end on the front face 8.

Two juxtaposed teeth 41, 42 jut out from the groove sides.

In a region of non-overlap with the teeth 41, 42, in the plane of the face 21, the groove is closed at the bottom by a diaphragm 43.

At the open end of the groove, the top wall 8 has a recess 44 receiving the head 38 of the slide.

The recess 44 is closed at the bottom by a diaphragm 45 terminated with a free edge 46 parallel to the plane of the face.

As shown in Figure 3, the slide is inserted into the groove through the open end of the latter, such that the teeth 41, 42 will partly embrace the tab 37 to prevent it from coming off its housing.

Once the slide is inserted into its housing, the diaphragm 43 and the edge 46 form a bearing sliding surface for the slide.

The insertion of the slide into its seat involves driving and elastic deformation with deflection, which brings the tooth 40 to overlie and move over the edge 46 of the diaphragm 45.

Upon the tab 37 thus inserted resuming its undeformed condition, the tooth 40 prevents the slide from slipping off its seat, while allowing a predetermined travel stroke of the slide in its seat, which travel stroke will depend on the distance of the tooth 40 from the head 38.

This distance is conveniently selected to enable the slide, and hence the tooth 36, to take two positions, of which a first with the head 38 from the slide retracted from the recess 44 allows the tooth 36 to be inserted into an opening (such as 35 in Figure 1) of the module to be hooked, a second with the head 38 received in the corresponding recess 44, ensures hooking of the tooth 36 to the wall of the juxtaposed module.

Figure 3 shows the slide 47 installed in its housing and in the inserted position, ready for hooking.

It is apparent that by exerting a manual pressure on the head 38, the slide can be easily moved to the hooking position, with the head 38 received in the recess 44, and release requires that the head 38 be withdrawn from the recess 44, which operation would involve the use of some tool.

The hooked position of the slide can then be made stable, e.g. by providing a hemispherical elevation (or recess) on the face of the tab 37 contacting the diaphragm 43, and a corresponding recess (or elevation) on the diaphragm 43.

It is apparent from Figure 2 that the slide-receiving groove, with the teeth 41, 42 and the diaphragms 43, 45, can be easily molded in the shell 41 with a molding axis perpendicular to the side face 21, with no formation of undercuts or other obstacles to make the operation a complicated one.

As to the dimensions of the modules, extending essentially in the direction of the plane of the side faces, with a height between the top and bottom faces on the order of 9-10 cm, depth between the back and front face on the order of 7-8 cm and width or distance between side faces on the order of 2-4 cm, it is apparent, in fact, that the module body is preferably formed of two molded half-shells mating across a plane (or several planes) parallel to the side faces with a molding direction perpendicular to the plane of the side faces.

It is also evident that the slide and its housing extend essentially in the plane of the side face, with minimum cross dimension, in practice limited to within a few millimeters and hence such as not to interfere with the electromechanical components housed in the module bodies.

Finally, bulk on the face 8 is limited to a surface of few square millimeters necessary to allow for push driving the slide and therefore such as not to interfere with any connection, actuation, display devices present on walls of the module other than the side faces.

Even more reduced is the bulk of the hooking device in the module 12, restricted to the openings 34, 35 on the side faces and to minimal inside bulk for accommodating the head of the teeth 32, 33 in Figure 1.

To provide a more accurate indication of such bulks, it can be observed that the length of the groove receiving the hooking slide may be on the order of 10-15 mm, its width on the order of 3-5 mm and its depth on the order of 2 mm.

Corresponding dimensions has also the hooking slide, provided with a tooth about 3 mm-high, 2 mm-wide and 4-5 mm-long.

The head of the slide may have dimensions on the order of 3 x 3 mm.

It is apparent that the structure illustrated in detail by Figures 2 and 3 relates both to the tooth 33 of Figure 1 and the tooth 32, and in general, a plurality of slides with hooking teeth such as 32, 33 may be provided even in excess of 2, and the layout of the slides on one of the modules rather than on the other or both.

The foregoing description concerns essentially the coupling of a differential actuator 1 to a bipolar switch 12, but it is evident that it should be taken as extended to any type of module.

In particular, the module 12 in Figure 1 may be replaced, as shown in the Figure, with two bipolar switching modules side-by-side and coupled together by devices like those described, of which only the head 50 as the slide 47 in Figure 3 is shown in Figure 1.

## Claims

1. A coupling device provided on two modular electric apparatus (1,12) to be juxtaposed and coupled on their side faces (21,22), comprising a plurality of locating pins (26,27,28) and matching sockets (29,30,31) for said pins, disposed on the side faces (21,22) to be juxtaposed of the two apparatus which provide mutual positioning of the modular apparatus (1,12),
characterised in that said coupling device further comprises:
- a plurality of slides (37) in at least one of said apparatus (1,12), each slide (37) being slidably received in a recess provided on one of said side faces (21), being slidable parallel to the plane of said one side face (21) to be juxtaposed and being provided with a hooking tooth (32,33) protruding from the plane of said one side face (21) and with an actuation head (38) accessible on a face (22) of said modular apparatus other than said one side face (21), and
- a plurality of hooking sockets (34,35) disposed on at least one of said side faces (21,22) to be juxtaposed, each matching one of said teeth (32,33) when said side faces (21,22) are juxtaposed.

2. A coupling device as in Claim 1, wherein said plurality of locating pins (26,27,28) and sockets (29,30,31) matching said pins (26,27,28) comprise two locating pins and two matching sockets in a pair of apparatus (1,12) to be coupled with electric characteristics of a first type and three locating pins and three matching sockets in a pair of apparatus to be coupled with electric characteristics of a second type, two of said pins having identical layouts with that of the pins and sockets of said apparatus pair with electric characteristics of the first type.

3. A coupling device as in the preceding claims wherein said plurality of locating pins (26,27,28) and sockets (29,30,31) matching said pins comprise pins and sockets correlated as to number and/or shape and/or spatial position on said side faces (21,22,) with an electric characteristic of the electric apparatus on which they are disposed.

4. A coupling device as in the preceding claims wherein each of said slides (37) is received in a groove present on one of said side faces (21,22), provided with at least a pair of holding teeth (41,42) for said slide (37), elongate in the direction of said groove, an inner bearing diaphragm (43) of said slide (37) parallel to said side face (21,22) and non-overlapping said holding teeth (41,42) in a perpendicular direction to said side face (21,22) and with an end opening provided with an inward edge (46) parallel to said side face and non-overlapping said holding teeth (41,42), for the introduction of said slide (37) into said groove between said pair of holding teeth (41,42) on the one side and said inner bearing diaphragm (43) and inward edge (46) on the other.

5. A coupling device as in the preceding claims wherein each said slide (37) is provided with a retainer tooth (40) for preventing said slide (37) from coming off said groove.

6. A coupling device as in Claim 5, wherein said retainer tooth (40) co-operates with said inward edge (46) to prevent said slide (37) from coming off said groove.

## Patentansprüche

1. Ein Kopplungselement, das auf zwei modularen elektrischen Vorrichtungen (1, 12) vorgesehen ist, die nebeneinanderliegend angeordnet und an ihren Seitenflächen (21, 22) gekoppelt werden sollen, wobei das Kopplungselement eine Mehrzahl von Positionierungsstiften (26, 27, 28) und zusammenpassenden Sockeln (29, 30, 31) für die Stifte aufweist, die an den nebeneinander anzuordnenden Seitenflächen (21, 22) der zwei Vorrichtungen angeordnet sind, die eine gegenseitige Positionierung der modularen Vorrichtungen (1, 12) liefern,
wobei das Kopplungselement ferner durch folgende Merkmale gekennzeichnet ist:
eine Mehrzahl von Gleitstücken (37) in zumindest einer der Vorrichungen (1, 12), wobei jedes Gleitstück (37) in einer Ausnehmung verschiebbar aufgenommen ist, die in einer der Seitenflächen (21) vorgesehen ist, wobei jedes Gleitstück (37) parallel zu der Ebene der einen nebeneinander anzuordnenden Seitenfläche (21) verschiebbar ist und wobei jedes Gleitstück (37) mit einem Einhakzahn (32, 33), der aus der Ebene der einen Seitenfläche (21) herausragt, und mit einem Betätigungskopf (38) versehen ist, der auf einer Seite (22) der modularen Vorrichtung, die nicht die eine Seitenfläche (21) ist, zugänglich ist, und
eine Mehrzahl von Einhaksockeln (34, 35), die auf zumindest einer der nebeneinander anzuordnenden Seitenflächen (21, 22) angeordnet sind und jeweils mit einem der Zähne (32, 33) zusammenpassen, wenn die Seitenflächen (21, 22) nebeneinander angeordnet sind.

2. Ein Kopplungselement gemäß Anspruch 1, bei dem die Mehrzahl von Positionierungsstiften (26, 27, 28) und Sockeln (29, 30, 31), die mit den Stiften (26, 27, 28) zusammenpassen, zwei Positionierungsstifte und zwei dazu passende Sockel in einem Paar von Vorrichtungen (1, 12), die mit den elektrischen Eigenschaften eines ersten Typs gekoppelt werden sollen, und drei Positionierungsstifte und drei dazu passende Stifte in einem Paar von Vorrichtungen aufweisen, die mit den elektrischen Eigenschaften eines zweiten Typs gekoppelt werden sollen, wobei zwei der Stifte identische Ausgestaltungen wie diejenigen Stifte und Sockel des Vorrichtungspaars mit den elektrischen Eigenschaften des ersten Typs aufweisen.

3. Ein Kopplungselement gemäß einem der vorhergehenden Ansprüche, bei dem die Mehrzahl von Positionierungsstiften (26, 27, 28) und Sockeln (29, 30, 31), die mit den Stiften zusammenpassen, Stifte und Sockel aufweisen, die mit der Anzahl und/oder Form und/oder räumlichen Position auf den Seitenflächen (21, 22) mit einer elektrischen Eigenschaft der elektrischen Vorrichtung, auf der dieselben angeordnet sind, in Beziehung stehen.

4. Ein Kopplungselement gemäß einem der vorhergehenden Ansprüche, bei dem jedes der Gleitstücke (37) in einer Nut aufgenommen ist, die auf einer der Seitenflächen (21, 22) vorhanden ist, die mit zumindest einem Paar von Haltezähnen (41, 42) für das Gleitstück (37) in der Längsrichtung der Nut versehen sind, wobei eine innere Auflagetrennwand (43) des Gleitstückes (37) parallel zu der Seitenfläche (21, 22) angeordnet ist und die Haltezähne (41, 42) in einer zu der Seitenfläche (21, 22) senkrechten Richtung nicht überlappt, und wobei eine Endöffnung mit einer nach innen gerichteten Kante (46) versehen ist, die parallel zu der Seitenfläche angeordnet ist und die Haltezähne (41, 42) nicht überlappt, zum Einbringen des Gleitstückes (37) in die Nut zwischen dem Paar von Haltezähnen (41, 42) auf der einen Seite und der inneren Auflagetrennwand (43) und der nach innen gerichteten Kante (46) auf der anderen Seite.

5. Ein Kopplungselement gemäß einem der vorhergehenden Ansprüche, bei dem jedes Gleitstück (37) mit einem Zurückhaltezahn (40) versehen ist, um zu verhindern, daß sich das Gleitstück (37) aus der Nut löst.

6. Ein Kopplungselement gemäß Anspruch 5, bei dem der Zurückhaltezahn (40) mit der nach innen gerichteten Kante (46) zusammenwirkt, um zu verhindern, daß sich das Gleitstück (37) aus der Nut löst.

## Revendications

1. Dispositif d'accouplement prévu sur deux appareils électriques modulaires (1, 12) devant être juxtaposés et accouplés sur leurs faces latérales (21, 22), comportant plusieurs broches de positionnement (26, 27, 28) et des alvéoles adaptés (29, 30, 31) pour lesdites broches, disposés sur les faces latérales (21, 22) devant être juxtaposées des deux appareils qui assurent un positionnement mutuel des appareils modulaires (1, 12),
caractérisé en ce que ledit dispositif d'accouplement comporte en outre :
- plusieurs curseurs (37) dans au moins l'un desdits appareils (1, 12), chaque curseur (37) étant reçu de façon coulissante dans un évidement situé sur l'une desdites faces latérales (21), pouvant coulisser parallèlement au plan de ladite face latérale (21) devant être juxtaposée et étant pourvu d'une dent d'accrochage (32, 33) faisant saillie du plan de ladite face latérale (21), et d'une tête d'actionnement (38) accessible sur une face (22) dudit appareil modulaire autre que ladite face latérale (21), et
- plusieurs alvéoles d'accrochage (34, 35) disposés sur au moins l'une desdites faces latérales (21, 22) devant être juxtaposées, s'adaptant chacune à l'une desdites dents (32, 33) lorsque lesdites faces latérales (21, 22) sont juxtaposées.

2. Dispositif d'accouplement selon la revendication 1, dans lequel ladite pluralité de broches (26, 27, 28) de positionnement et d'alvéoles (29, 30, 31) adaptés auxdites broches (26, 27, 28) comprend deux broches de positionnement et deux alvéoles adaptés dans une paire d'appareils (1, 12) devant être accouplés, ayant des caractéristiques électriques d'un premier type, et trois broches de positionnement et trois alvéoles adaptés dans une paire d'appareils devant être accouplés, ayant des caractéristiques électriques d'un second type, deux desdites broches ayant des dispositions identiques à celles des broches et alvéoles de ladite paire d'appareils ayant des caractéristiques électriques du premier type.

3. Dispositif d'accouplement selon les revendications précédentes, dans lequel ladite pluralité de broches de positionnement (26, 27, 28) et d'alvéoles (29, 30, 31) adaptés auxdites broches comprend des broches et des alvéoles en corrélation en ce qui concerne le nombre et/ou la forme et/ou la position dans l'espace sur lesdites faces latérales (21, 22), avec une caractéristique électrique des appareils électriques sur lesquels ils sont disposés.

4. Dispositif d'accouplement selon les revendications précédentes, dans lequel chacun desdits curseurs (37) est reçu dans une gorge présente sur l'une desdites faces latérales (21, 22), pourvue d'au moins une paire de dents de maintien (41, 42) pour ledit curseur (37), allongées dans la direction de ladite gorge, d'un diaphragme d'appui intérieur (43) dudit curseur (37) parallèle à ladite face latérale (21, 22) et ne chevauchant pas ladite dent de maintien (41, 42) dans une direction perpendiculaire à ladite face latérale (21, 22), et présentant une ouverture extrême pourvue d'un bord intérieur (46) parallèle à ladite face latérale et ne chevauchant pas lesdites dents de maintien (41, 42), pour l'introduction dudit curseur (37) dans ladite gorge entre lesdites deux dents de maintien (41, 42) sur un premier côté et ledit diaphragme d'appui intérieur (43) et un bord intérieur (46) sur l'autre côté.

5. Dispositif d'accouplement selon la revendication précédente, dans lequel chacun desdits curseurs (37) est pourvu d'une dent de retenue (40) destinée à empêcher ledit curseur (37) de se dégager de ladite gorge.

6. Dispositif d'accouplement selon la revendication 5, dans lequel ladite dent de retenue (40) coopère avec ledit bord intérieur (46) pour empêcher ledit curseur (37) de se dégager de ladite gorge.
